# EUROPEAN PATENT SPECIFICATION

(11) **EP 3 141 098 B1**
(45) Date of publication and mention of the grant of the patent: **11.04.2018**
(21) Application number: 16187254.4
(22) Date of filing: 05.09.2016
(51) Int. Cl.: A01D 34/71, A01D 43/063

(54) **LAWNMOWER WITH AUTOMATIC CLOSING OF A GRAVEL GUARD**
RASENMÄHER MIT AUTOMATISCHEM SCHLIESSEN EINER AUSWURFSCHUTZKLAPPE
TONDEUSE À GAZON AVEC FERMETURE AUTOMATIQUE D'UNE GARDE DE GRAVIER

(30) Priority: 10.09.2015 IT UB20153536
(43) Date of publication of application: 15.03.2017
(73) Proprietor: Stiga S.p.A. in breve anche St. S.p.A., 31033 Castelfranco Veneto (TV) (IT)
(72) Inventor: BACCHIN, Gian Luca, 31033 Castelfranco Veneto (TV) (IT); ZONTA, Paolo, 31033 Castelfranco Veneto (TV) (IT); PIETROBON, Christian, 36022 S. Giuseppe di Cassola (VI) (IT)
(74) Representative: Mittler, Andrea

(56) References cited:
- US-A- 4 031 694
- US-A- 4 151 702
- US-A- 4 214 424
- US-A- 4 800 712

## Description

The present invention relates to a lawnmower with automatic closing of a gravel guard.

Push lawnmowers are widely used in housework and are well described in the prior art. Certain lawnmowers have an opening in the rear area of the lawnmower, adapted to expel the cut grass.

A bag for collecting the cut grass may be connected to the rear opening, or the grass may be left to fall on the ground. Therefore, a lawnmower may have a gravel guard on the rear opening capable of allowing the grass to come out without hitting the operator and capable of being coupled to the collection bag.

US20140373499A1 describes a locking system for the rear gravel guard panel of a lawnmower. A support fixed to the frame of the lawnmower is suitable for interacting with the pin of the panel so as to lock it in an open position during the removal of the bag. Alternatively, a rod with a spring return mechanism is fixed to the frame of the lawnmower and carries the cover by keeping it in an open position.

EP2737787A1 describes a lawnmower with a rear opening on which a deflector is mounted fixed to the frame. The deflector is movable and may switch from a closed to an open position. The deflector also comprises a support consisting of deformable material. In the open position, the support carries the deflector, pushed by a spring fixed to the frame of the lawnmower. The support allows the deflector to switch to a closed position following a downward pressure.

GB2333435B describes a lawnmower with a movable cover mounted on the rear part to allow the outlet of the cut grass. The cover may be kept in an open position due to a system with two springs - a helical torsion spring and a lever spring - fixed to the frame of the lawnmower.

US4800712A describes a lawnmower comprising a cutting plate, two supports, a gravel guard rotably connected to said supports and a basket container. Said basket container comprises inserts adapted to slide in sliding guides provided on the basket.

Disadvantageously, the removal and application of the basket container in the gravel guards described is assisted by springs which tend to recall the gravel guard into a closed position, thus making the bag removal operations more difficult.

A further disadvantage is that the gravel guard comes back into contact with the outlet door for the grass while the bag is being removed, dragging a part of cut grass therewith from the bag.

An additional disadvantage is that the operator should use both hands to remove or apply the basket container, thus limiting the operating capacity of the operator.

It is the object of the present invention to have a device for an easy removal and application of the basket container.

It is another object to have a device which allows the basket container to be removed without the gravel guard letting grass collected out of the bag.

It is still another object to have a device which allows the insertion of the basket container using one hand alone, with easier movements for the operator.

According to the invention, such objects are achieved by a lawnmower as described in claim 1.

These and other features of the present invention will become more apparent from the following detailed description and in an embodiment thereof, shown by way of non-limiting example in the following accompanying drawings, in which:
Figure 1 shows a top plan view of a lawnmower;
Figure 2 shows a side view of a hooking device for a basket container;
Figure 3 shows a rear view of a gravel guard;
Figure 4 shows a sectional view of the gravel guard, according to line VI-VI in Figure 3;
Figure 5 shows a side view of a sliding insert of the gravel guard;
Figure 6 shows a detail of the section of the gravel guard shown in Figure 4;
Figure 7 shows a perspective view of a frame of the basket container;
Figure 8 shows a perspective view of a bracket of the lawnmower;
Figure 9 shows a sectional view according to line IX-IX in Figure 1, of the hooking device of the basket container in an initial position;
Figure 10 shows a sectional view according to line IX-IX in Figure 1, of the hooking device of the basket container in a sliding position;
Figure 11 shows a sectional view according to line IX-IX in Figure 1, of the hooking device of the basket container in a hooking position;
Figure 12 shows a sectional view according to line IX-IX in Figure 1, of the hooking device of the basket container in a locking position;
Figure 13 shows a sectional view according to line IX-IX in Figure 1, of the hooking device of the basket container in an uncoupled position;

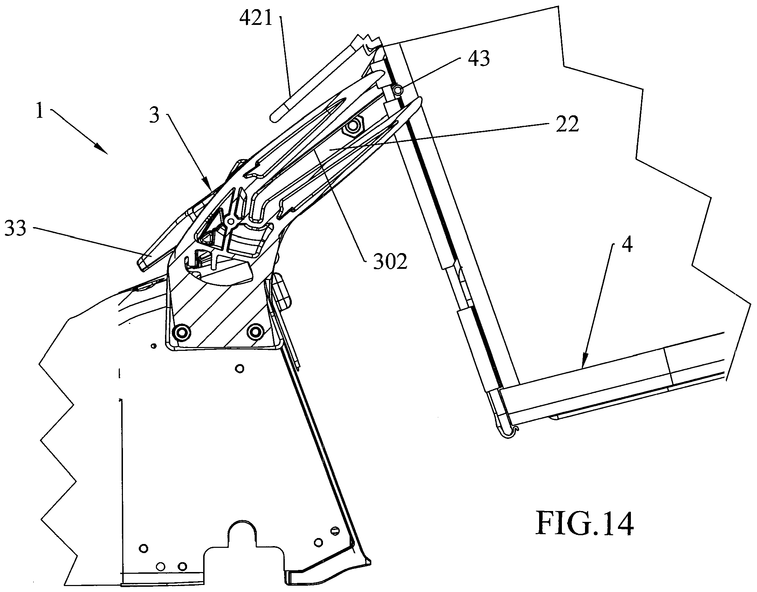

Figure 14 shows a sectional view according to line IX-IX in Figure 1, of the hooking device of the basket container in a position of partial removal of the basket;

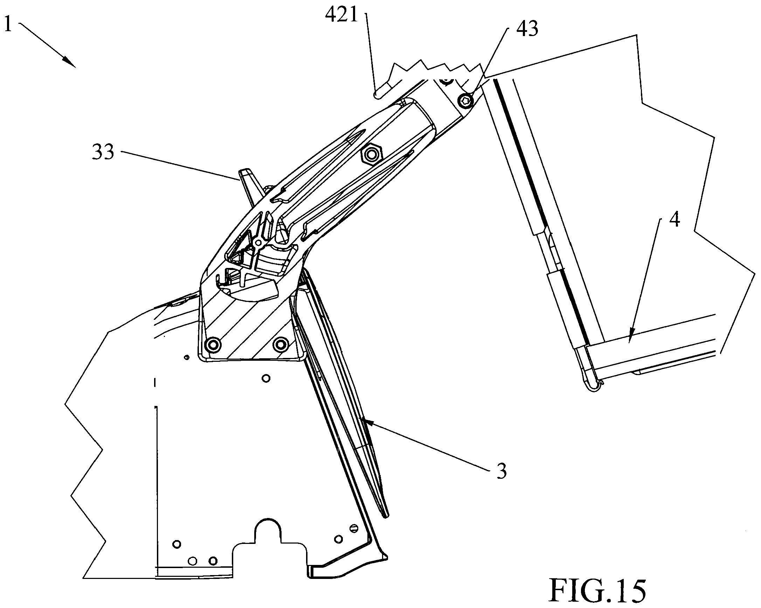

Figure 15 shows a sectional view according to line IX-IX in Figure 1, of the hooking device of the basket container in a position of complete removal of the basket.

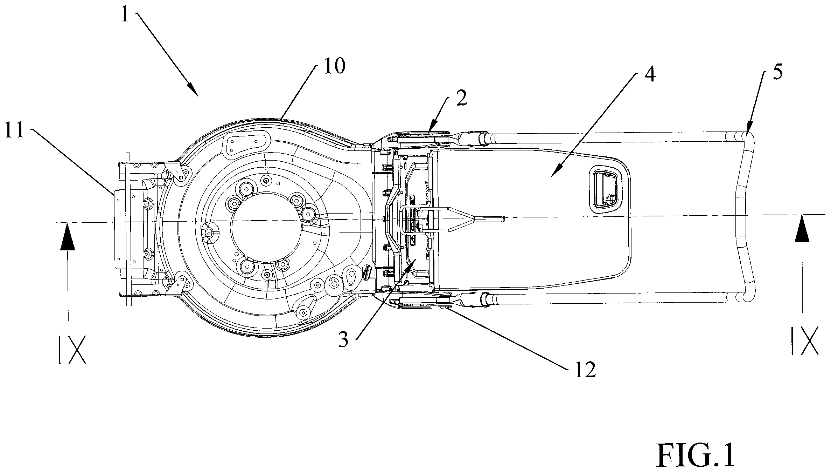

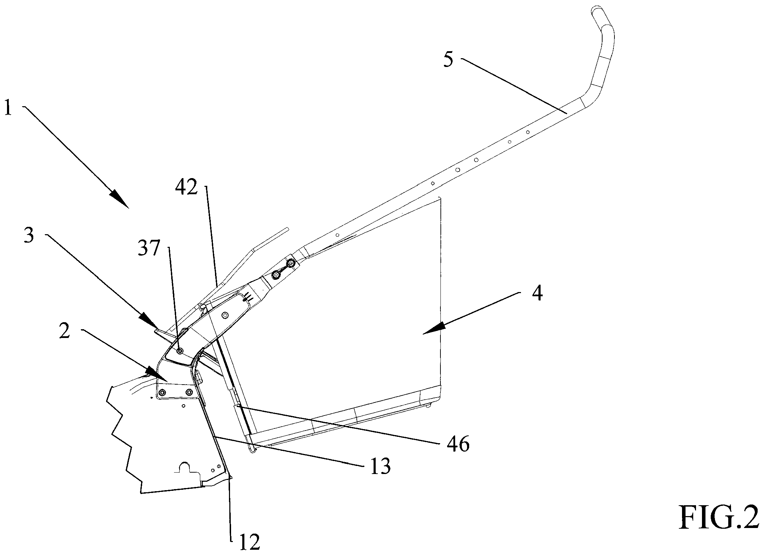

With reference to the figures listed above, in particular to Figures 1 and 2, a lawnmower 1 comprises two brackets 2, a gravel guard 3, a basket container 4 and a push handle 5.

Lawnmower 1 further comprises a cutting plate 10, a front side 11 and a rear side 12. The rear side 12 of lawnmower 1 provides an outlet opening 13 adapted to allow the cut grass to pass outwards.

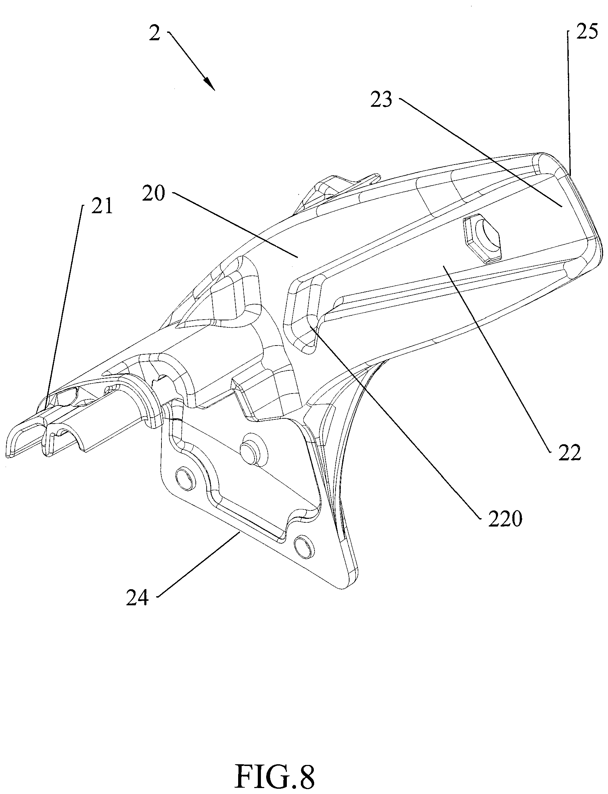

The brackets 2 are fixed to the ends of the rear side 12 by means of screws or rivets. As shown in Figure 8, the brackets 2 provide an inner face 20 comprising an opening 23 from which a sliding guide 22 originates, which ends with a narrowing 220 which is inclined with respect to the sliding guide 22. Said brackets 2 provide a first end 24 adapted to be fixed to lawnmower 1 and a second end 25 adapted to be connected with the push handle 5.

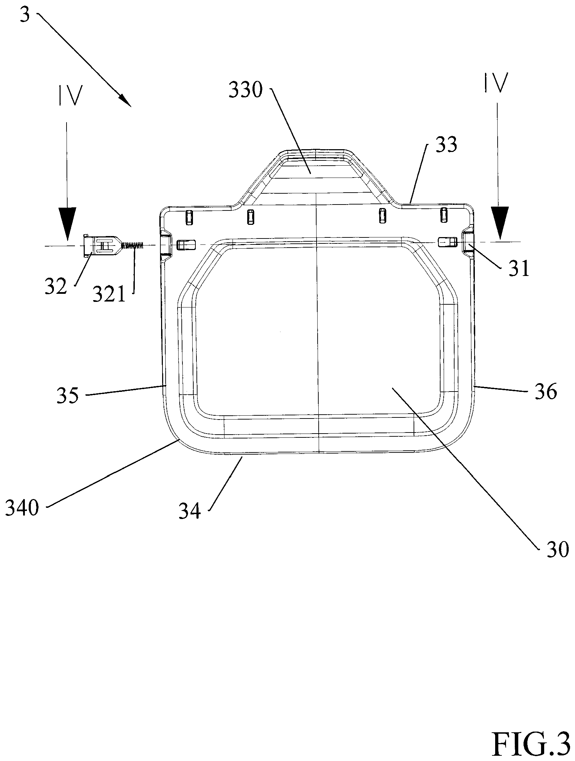

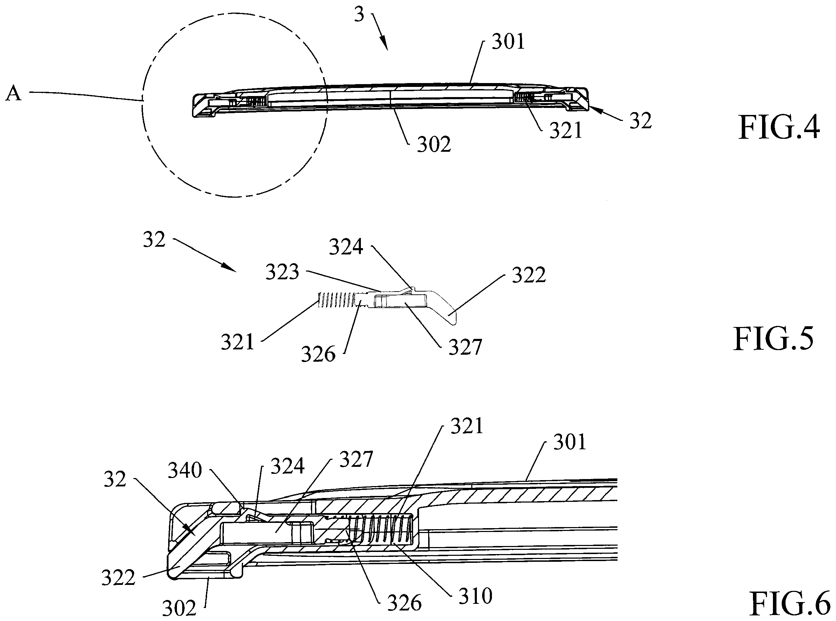

The gravel guard 3 is suitable for being rotably connected to the brackets 2 by means of one or more pins 37. Said gravel guard 3 is suitable for completely closing the outlet opening 13 of lawnmower 1. As shown in Figure 3, the gravel guard 3 is square in shape and a first side 33 thereof has a protrusion 330, while a second side 34 has two rounded corners 340. Two joining sides 35 and 36 each have an opening 31 positioned close to side 33 from which two cavities 310 originate (shown in detail in Figure 6).

With reference to Figures 4 to 6, a sliding insert 32 is suitable for being slidingly inserted into cavity 310 of the gravel guard 3. Said sliding insert 32 (Figure 5) comprises an inclined portion 322 and a linear portion 323. Said linear portion 323 provides a retaining tooth 324. A narrowing 326 is provided at one end of the sliding insert 32, opposite to the inclined portion 322. A spring 321 is suitable for being inserted into narrowing 326 of the sliding insert 32. The retaining tooth 324 of the sliding insert 32 is suitable for being inserted into a joint 340 of cavity 310 (Figure 6).

The gravel guard 3 further comprises a lower portion 302 opposite to an upper portion 301.

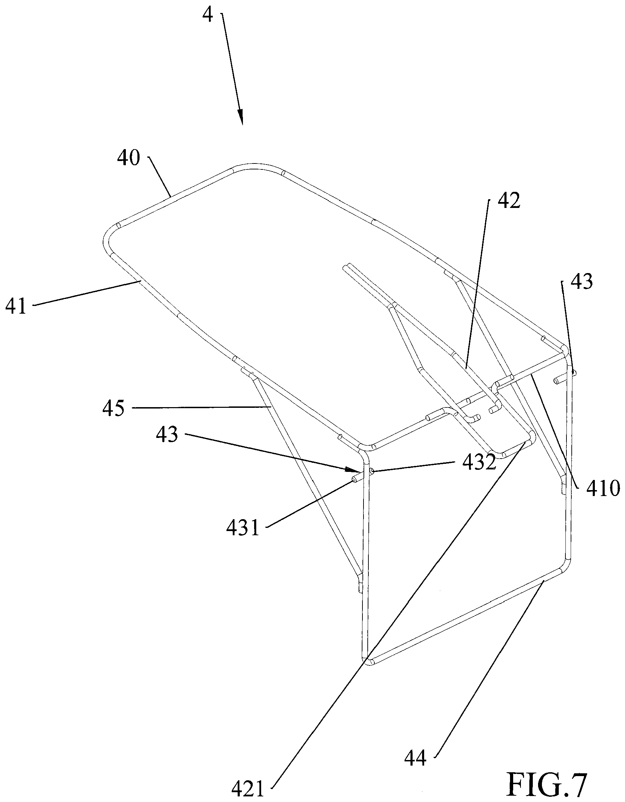

With reference to Figures 2 and 7, the basket container 4 comprises an inlet opening 46, a frame 40 consisting of a first rectangular portion 41 joined to a second square portion 44 by means of two inclined supports 45. The first portion 41 comprises a side 410 to which the second portion 44 of frame 40 is connected. The first portion 41 and the second portion 44 form an angle close to 90°. Pegs 43 are fixed to the second portion 44 of frame 40, close to the joining angle with the first portion 41. Said pegs 43 protrude both towards the outside and towards the inside of frame 40. An outer portion 431 of the pegs 43 is suitable for sliding in the sliding guides 22 of the brackets 2, while an inner portion 432 of the pegs 43 is suitable for pressing the sliding insert 32 of the gravel guard 3.

Said sliding insert 32 has a trigger function: in an initial position of the sliding insert 32, spring 321 is extended, while in a push position, spring 321 is compressed and the hollow body returns into cavity 310.

Following a push of the pegs 43 on the sliding insert 32 towards the inside of the gravel guard 3, the sliding insert 32 slides towards the inside of cavity 310, thus compressing spring 321. By releasing the push on the sliding insert 32, spring 321 stretches out, the sliding insert 32 slides towards the outside of cavity 310, locking the inner portion 432 of the pegs 43 on the lower portion 302 of the gravel guard 3. Thereby, the gravel guard 3 remains in the open position, upheld by the inner portion 432 of the pegs 43. The sliding insert 32 slides towards the outside of cavity 310 until the retaining tooth 324 of the sliding insert 32 reaches the joint 340 of cavity 310.

A support 42 is fixed at the top to the middle of side 410 of the first portion 41 of frame 40. Said support 42 protrudes towards the inside of frame 40. Side 410 also has a projection 421 which protrudes towards the outside of frame 40, in the direction opposite to support 42.

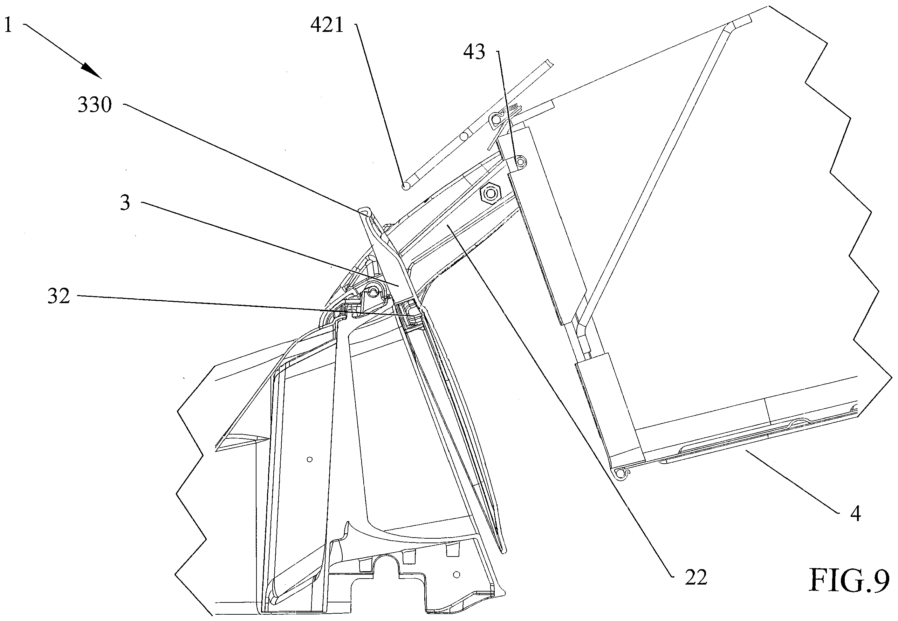

As shown in Figure 9, in a closed position, the gravel guard 3 is in contact with outlet opening 13 of the lawnmower 1 and the basket container 4 is not engaged on the lawnmower 1.

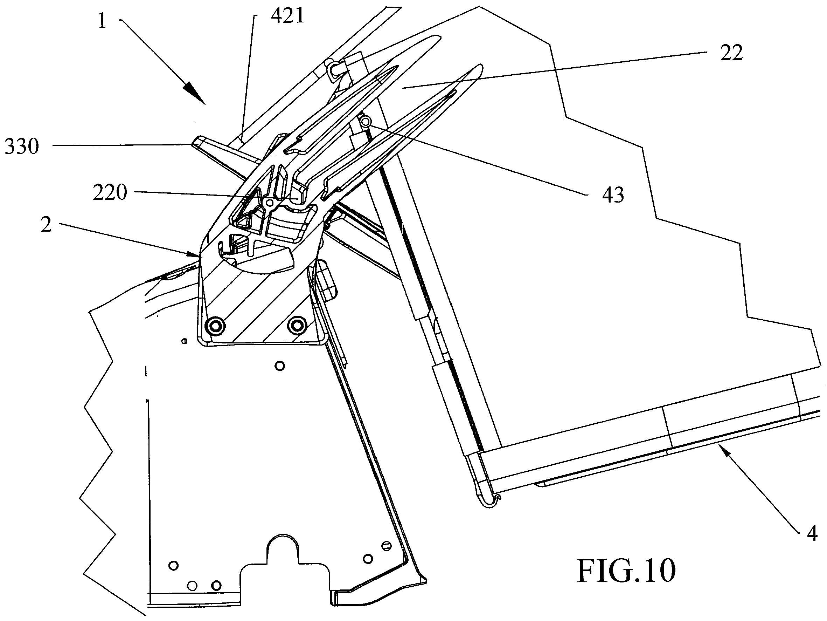

The pegs 43 of basket 4 are to be aligned within the sliding guides 22 of the brackets 2 to insert the basket container 4 (Figure 10) and the projection 421 of the side 410 of frame 40 is to rest on protrusion 330 of the gravel guard 3 by allowing the pegs 43 to slide in the sliding guides 22.

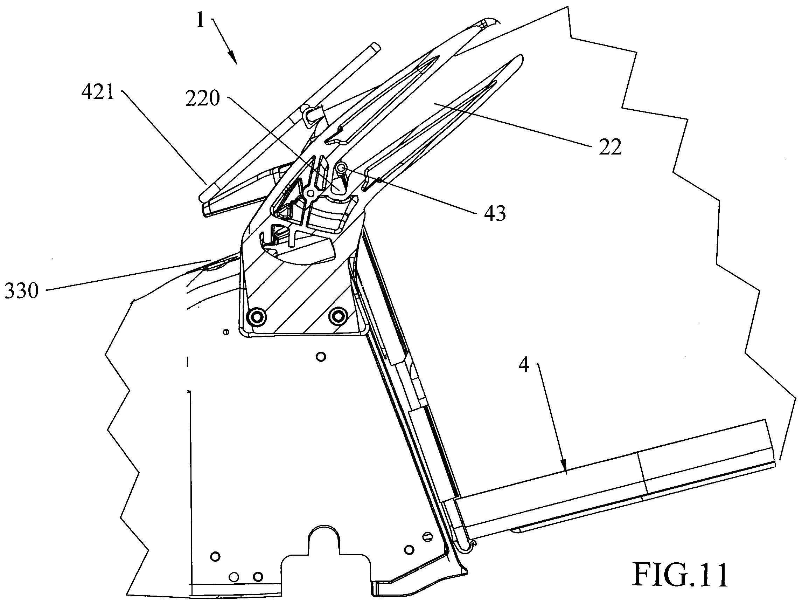

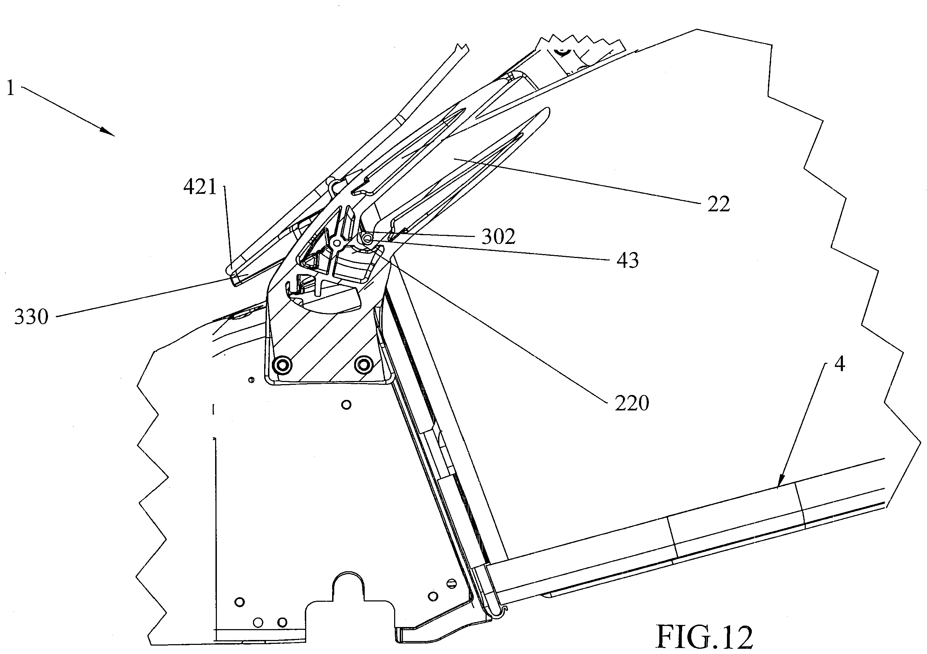

The gravel guard 3 is adapted to carry out an anticlockwise rotation (looking at image 10) towards the inlet opening 46 of the basket container 4 following the push of the projection 421 of frame 40. As shown in Figures 11 and 12, the pegs 43 of the basket container 4 slide in the guides 22 up to reaching narrowing 220 of the guides 22. Since the inner portion 432 of the pegs 43 is aligned with the inclined portion 322 of the sliding insert 32 of the gravel guard 3, it pushes the sliding insert 32 towards the inside of cavity 310, thus compressing spring 321. Passing the inclined portion 322 of the sliding insert 32, the inner portion 432 of the pegs 43 comes into contact with the lower portion 302 of the gravel guard 3 and carries the gravel guard 3.

The gravel guard 3 performs a rotation of about 90 degrees towards the inside of the basket container 4 and, in a complete hooking position of the basket container 4 to lawnmower 1, the gravel guard 3 is more than ¾ inside said basket container 4, which in turn is completely in contact with the outlet opening 13 of lawnmower 1.

In this complete hooking position, the cut grass is pushed inside the basket container 4 without external losses of material and the basket container 4 is fixed to the brackets 2 due to the outer portion 431 of the pegs 43, which is inserted in the narrowings 220 of the guides 22. The gravel guard 3 is kept open due to the inner portion 432 of the pegs 43 which, having passed the inclined portion 322 of the sliding insert 32, push the sliding insert 32 towards the inside, thus carrying the gravel guard 3 by means of the lower portion 302 of the gravel guard 3.

The projection 421 of frame 40 carries the gravel guard 3 in almost parallel position to the first portion 41 of frame 40 of the basket container 4 while pressing on the protrusion 330 of the gravel guard 3. Such a position is maintained by the trigger system formed by the sliding insert 32 described above.

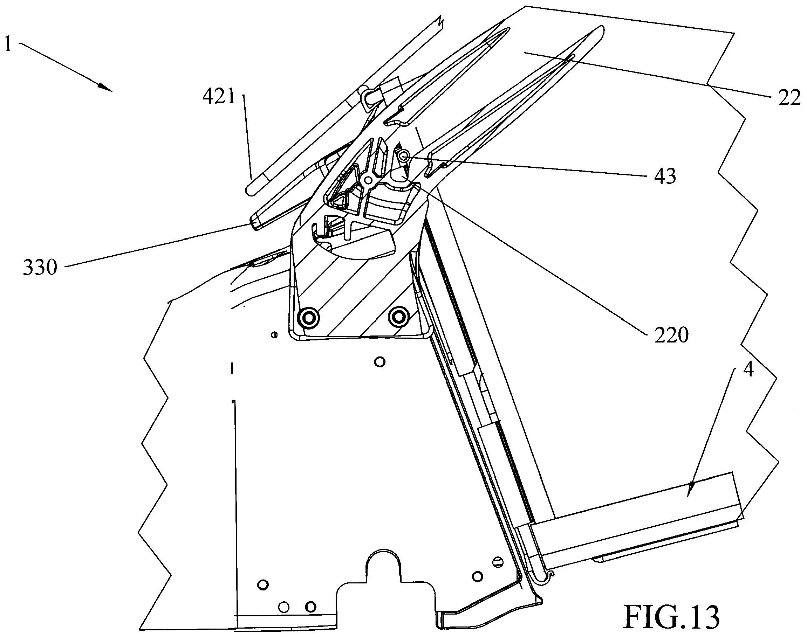

To remove container 4 from lawnmower 1, an upwards traction is to be applied to the basket container 4 by means of support 42. Said traction is adapted to disengage the outer portion 431 of the pegs 43 from the narrowings 220 of the sliding guides 22 of the brackets 2. Since the inner portion 432 of the pegs 43 is in contact with the lower portion 302 of the gravel guard 3, it will carry the gravel guard 3 in the open position up to the basket container 4 completely coming out (Figure 13) without the gravel guard 3 closing the outlet opening 13, thus dragging out the cut grass contained in the basket container 4.

When the pegs 43 come out of the guides 22, the gravel guard 3 is completely outside the basket container 4, the inner portion 432 of the pegs 43 will no longer carry the gravel guard 3 which is adapted to return to the closed position in contact with the outlet opening 13.

Advantageously, this closing device allows the basket container 4 to be released without dispersing the grass contained in said basket container 4.

A further advantage is that the operator may hook and release the basket container 4 from lawnmower 1 with easier movements using a single hand.

An additional advantage is the ease with which an operator may hook and release the basket container 4 from the lawnmower 1, indeed the sliding guides 22 allow the operator to guide the insertion of the basket container 4 onto lawnmower 1.

Another advantage is given by the basket container 4 being firmly fixed to lawnmower 1 without the use of external hooks, which may easily disengage the basket container 4 due to uneven ground.

## Claims

1. Lawnmower (1) comprising a cutting plate (10), two brackets (2), a gravel guard (3) rotably connected to the brackets (2) and a basket container (4) comprising pegs (43) suitable for sliding within sliding guides (22) provided on the brackets (2), **characterized in that** the gravel guard (3) comprises sliding inserts (32) acts to direct the pegs (43) of the basket container (4) toward a lower portion (302) of the gravel guard (3), said pegs (43) supporting said gravel guard (3) until the complete removal of the basket container (4) from the lawnmower (1).

2. Lawnmower (1) according to claim 1, **characterized in that** a projection (421) of the basket container (4) of the lawnmower (1) protruding towards the outside of said basket container (4) is suitable for pressing against a protrusion (330) of the gravel guard (3) causing the opening of said gravel guard (3) allowing the insertion of the basket container (4).

3. Lawnmower (1) according to claim 1 or 2, **characterized in that** the sliding insert (32) of the gravel guard (3) comprises an inclined portion (322) and a spring (321), in an hooking position of the basket container (4) to the lawnmower (1) the pegs (43) are suitable for pressing on the sliding insert (32) compressing the spring (321), the sliding insert (32) is suitable for allowing the passage of the pegs (43) toward the lower portion (302) of the gravel guard (3) by returning the spring (321) in an initial position of distension and to support the gravel guard (3) in the open position.

4. Lawnmower (1) according to any of the preceding claims, **characterized in that** the pegs (43) of the basket container (4) of the lawnmower (1) is protruding both towards the inside towards the outside of said basket container (4), in the hooking position of the basket container (4) to the lawnmower (1), an outer portion (431) of the pegs (43) of the basket container (4) is suitable for sliding within the sliding guides (22) of the brackets (2) while an inner portion (432) of the pegs (43) is suitable for engaging the sliding insert (32) and to support the gravel guard (3).

5. Lawnmower (1) according to any one of the preceding claims, **characterized in that** the sliding guides (22) of the brackets (2) of the lawnmower (1) ending with a narrowing (220) inclined with respect to the sliding guide (22) towards the lower portion (302) of the gravel guard (3).

6. Lawnmower (1) according to any one of the preceding claims, **characterized in that** the sliding insert (32) comprises a retaining tooth (324) suitable to fit into a joint (340) of a cavity (310).

## Patentansprüche

1. Rasenmäher (1) mit einer Schneidplatte (10), zwei Halterungen (2), einem mit den Halterungen (2) drehbar verbundenen Kiesschutz (3) und einem Korbbehälter (4) mit Zapfen (43), die in an den Halterungen (2) vorgesehenen Gleitführungen (22) gleiten können,
**dadurch gekennzeichnet, dass** der Kiesschutz (3) Gleiteinsätze (32) aufweist, um die Zapfen (43) des Korbbehälters (4) in Richtung auf einen unteren Bereich (302) des Kiesschutzes (3) zu führen, wobei die Zapfen (43) den Kiesschutz (3) bis zur vollständigen Abnahme des Korbbehälters (4) vom Rasenmäher (1) abstützen.

2. Rasenmäher (1) nach Anspruch 1,
**dadurch gekennzeichnet, dass** ein Vorsprung (421) des Korbbehälters (4) des Rasenmähers (1), der zur Außenseite des Korbbehälters (4) vorsteht, gegen einen Vorsprung (330) des Kiesschutzes (3) drücken kann, wodurch das Öffnen des Kiesschutzes (3) veranlasst wird, das das Einsetzen des Korbbehälters (4) ermöglicht.

3. Rasenmäher (1) nach Anspruch 1 oder 2,
**dadurch gekennzeichnet, dass** der Gleiteinsatz (32) des Kiesschutzes (3) einen geneigten Bereich (322) und eine Feder (321) aufweist, wobei in einer Einhängeposition des Korbbehälters (4) an dem Rasenmäher (1) die Zapfen (43) gegen den Gleiteinsatz (32) drücken können und dadurch die Feder (321) zusammengedrückt wird, wobei der Gleiteinsatz (32) geeignet ist, die Passage der Zapfen (43) in Richtung auf den unteren Bereich (302) des Kiesschutzes (3) zu ermöglichen, indem die Feder (321) in eine anfängliche gedehnte Position zurückgebracht wird, und um den Kiesschutz (3) in der offenen Position abzustützen.

4. Rasenmäher (1) nach einem der vorhergehenden Ansprüche,
**dadurch gekennzeichnet, dass** die Zapfen (43) des Korbbehälters (4) des Rasenmähers (1) sowohl zur Innenseite als auch zur Außenseite des Korbbehälters (4) vorstehen, wobei in der Einhängeposition des Korbbehälters (4) an dem Rasenmäher (1) ein äußerer Bereich (431) der Zapfen (43) des Korbbehälters (4) in den Gleitführungen (22) der Halterungen (2) gleiten kann, während ein innerer Bereich (432) der Zapfen (43) mit dem Gleiteinsatz (32) zusammenwirken kann, um den Kiesschutz (3) abzustützen.

5. Rasenmäher (1) nach einem der vorhergehenden Ansprüche,
**dadurch gekennzeichnet, dass** die Gleitführungen (22) der Halterungen (2) des Rasenmähers (1) mit einer Verjüngung (220) enden, die in Bezug auf die Gleitführung (22) in Richtung zu dem unteren Bereich (302) des Kiesschutzes (3) geneigt ist.

6. Rasenmäher (1) nach einem der vorhergehenden Ansprüche,
**dadurch gekennzeichnet, dass** der Gleiteinsatz (32) einen Haltezahn (324) aufweist, der dazu ausgebildet ist, in ein Gelenk (340) eines Hohlraums (310) zu passen.

## Revendications

1. Tondeuse à gazon (1) comprenant une plaque de coupe (10), deux supports (2), une protection contre le gravier (3) raccordée, en rotation, aux supports (2) et un récipient formant panier (4) comprenant des chevilles (43) appropriées pour coulisser à l'intérieur des guides de coulissement (22) prévus sur les supports (2), **caractérisée en ce que** la protection contre le gravier (3) comprend des inserts de coulissement (32) qui servent à diriger les chevilles (43) du récipient formant panier (4) vers une partie inférieure (302) de la protection contre le gravier (3), lesdites chevilles (43) supportant ladite protection contre le gravier (3) jusqu'au retrait complet du récipient formant panier (4) de la tondeuse à gazon (1).

2. Tondeuse à gazon (1) selon la revendication 1, **caractérisée en ce qu'**une saillie (421) du récipient formant panier (4) de la tondeuse à gazon (1) faisant saillie vers l'extérieur dudit récipient formant panier (4) est appropriée pour appuyer contre une saillie (330) de la protection contre le gravier (3) provoquant l'ouverture de ladite protection contre le gravier (3) permettant l'insertion du récipient formant panier (4).

3. Tondeuse à gazon (1) selon la revendication 1 ou 2, **caractérisée en ce que** l'insert de coulissement (32) de la protection contre le gravier (3) comprend une partie inclinée (322) et un ressort (321), dans une position d'accrochage du récipient formant panier (4) à la tondeuse à gazon (1), les chevilles (43) sont appropriées pour appuyer sur l'insert de coulissement (32) compressant le ressort (321), l'insert de coulissement (32) est approprié pour permettre le passage des chevilles (43) vers la partie inférieure (302) de la protection contre le gravier (3) en ramenant le ressort (321) dans une position initiale de distension et pour supporter la protection contre le gravier (3) dans la position ouverte.

4. Tondeuse à gazon (1) selon l'une quelconque des revendications précédentes, **caractérisée en ce que** les chevilles (43) du récipient formant panier (4) de la tondeuse à gazon (1) font saillie à la fois vers l'intérieur et vers l'extérieur du récipient formant panier (4), dans la position d'accrochage du récipient formant panier (4) à la tondeuse à gazon (1), une partie externe (431) des chevilles (43) du récipient formant panier (4) est appropriée pour coulisser à l'intérieur des guides de coulissement (22) des supports (2) alors qu'une partie interne (432) des chevilles (43) est appropriée pour mettre en prise l'insert de coulissement (32) et pour supporter la protection contre le gravier (3).

5. Tondeuse à gazon (1) selon l'une quelconque des revendications précédentes, **caractérisée en ce que** les guides de coulissement (22) des supports (2) de la tondeuse à gazon (1) se terminent avec un rétrécissement (220) incliné par rapport au guide de coulissement (22) vers la partie inférieure (302) de la protection contre le gravier (3).

6. Tondeuse à gazon (1) selon l'une quelconque des revendications précédentes, **caractérisée en ce que** l'insert de coulissement (32) comprend une dent de retenue (324) appropriée pour se monter dans un joint (340) d'une cavité (310).
